# EUROPEAN PATENT SPECIFICATION

(11) **EP 4 592 152 B1**
(45) Date of publication and mention of the grant of the patent: **18.11.2026**
(21) Application number: 24154203.4
(22) Date of filing: 26.01.2024
(51) Int. Cl.: B60T 17/22, F16D 65/00

(54) **A METHOD FOR ACTIVATING A BRAKE DISC CLEANING OPERATION**
VERFAHREN ZUR AKTIVIERUNG EINES BREMSSCHEIBENREINIGUNGSVORGANGS
PROCÉDÉ D'ACTIVATION D'UNE OPÉRATION DE NETTOYAGE DE DISQUE DE FREIN

(43) Date of publication of application: 30.07.2025
(73) Proprietor: Polestar Performance AB, 405 31 Gothenburg (SE)
(72) Inventor: SALIF, Ramadan, 418 77 Göteborg (SE); ALBINSSON, Anton, 443 50 Lerum (SE); LEE, Chih Feng, 421 42 Västra Frölunda (SE)
(74) Representative: Zacco Sweden AB

(56) References cited:
- EP-A1- 4 173 912
- DE-A1- 10 355 258
- DE-A1- 102018 103 104

## Description

### TECHNICAL FIELD

The present invention relates to a method for activating a brake disc cleaning operation for at least one wheel of a vehicle.

### BACKGROUND

A disc cleaning operation is important for vehicles to maintain optimal braking performance. A disc cleaning operation results in that brake dust, debris, corrosion, contaminants and other substances that can negatively impact the brake disc of the vehicle are removed.

Specifically, the brake disc can be negatively impacted by that the aforementioned deposits adversely affect the friction between the brake pad and the brake disc, leading to reduced braking efficiency, increased noise and vibration. Regular brake disc cleaning ensures smooth and effective braking, thereby contributing to overall safety and extending the lifespan of the braking components of the vehicle. Additionally, regular disc brake cleaning can ensure that severe stiction (where the brake pad and brake disc adhere) can be avoided to a larger extent. Conventionally, vehicles that are equipped with brake disc cleaning units are not operable to ensure that the brake disc clean function is not falsely used, and/or, they use the brake disc clean function inefficiently i.e. untimely. Accordingly, conventional vehicles tend to utilize the disc clean function more than necessary which will reduce the energy efficiency of the vehicle and/or they tend to utilize the disc clean function untimely which can result in that the brake disc is not cleaned at a time when it should be.

In the case of an electric vehicle, the range will be reduced for each time the brake disc clean function is used. Hence, it would be preferable if the brake disc was cleaned only when it is needed to assure that no energy is wasted unnecessarily while ensuring that the brake disc is clean enough to function properly.

DE102018103104 A1 discloses an apparatus that includes a controller to determine when a vehicle has made a turn, compare an angle at which the vehicle has turned to an angle threshold, and schedule a brake sweeping procedure based on the comparison.

DE10355258 A1 discloses a method for wiping the brakes of a motor vehicle under wet conditions.

EP4173912 A1 discloses a method for determining a starting condition for cleaning a brake disk. A first step of this method determines that an amount of rust on the brake disk exceeds a predefined threshold. Additionally, an energy quantity being necessary for removing the amount of rust from the brake disk is determined.

Accordingly, methods for activating clean disc operations of vehicle that are used in the present art can be improved in efficiency.

Therefore, it would be desirable to provide a method for activating a clean disc operation of a vehicle that is more efficient compared to the methods of the present art.

### SUMMARY

It is therefore an object of the present invention to alleviate at least some of the mentioned drawbacks to provide a method for activating/controlling a clean disc operation of at least one wheel of a vehicle. Further, the present invention provides an electronic control unit (ECU) and a computer-readable storage medium comprising instructions for performing such a method. Further, the invention provides a vehicle comprising such an ECU.

The present invention is at least partly based on the insight that the method herein is more efficient compared to conventional methods as the threshold that needs to be exceeded to activate the brake disc cleaning is based on environmental characteristics of a surrounding of said vehicle.

The present invention relates to a method for activating a brake disc cleaning operation for at least one wheel of a vehicle. The method comprising obtaining data indicative of environmental characteristics of a surrounding of said vehicle. Further, the method comprises determining spinning characteristics of said at least one wheel and activating/controlling said brake disc cleaning operation for said at least one wheel in response to said spinning characteristics exceeding a threshold. Further, the threshold is based on said data. In other words, the threshold may be dependent on said data. If the spinning characteristics exceeds said threshold it may be indicative of severe corrosion stiction such that the brake disc is adhered to the brake pad.

Advantageously, the method enable the brake disc cleaning operation to be activated only when needed, thereby being energy efficient while ensuring that the brake disc is clean.

The data indicative of environmental characteristics comprises data of inclination of a surface supporting said vehicle. The data indicative of environmental characteristics may comprise data of inclination of a surface supporting said vehicle and weather data of said surrounding of said vehicle. Weather data may be at least one of temperature, weather condition (e.g., sun, rain, snow), moisture, road surface temperature, road surface condition (wet, dry, snow-depth), salinity levels etc. The weather data may be a present/current/real-time weather data as well as historic weather data. The historic weather data may comprise data indicative of environmental characteristics of said surrounding of said vehicle during at least a part of the time the vehicle has been in said static state i.e. the weather data may e.g. indicate for the method, when threshold is set, that it has rained during the whole time the vehicle has been in said static state, which might affect setting of the threshold.

The method may further comprise the step of setting/selecting said threshold. This step may be performed prior to the step of activating. The threshold may be set subject to/based on said data. Hence, the threshold may be a dynamic/adaptive threshold. Specifically, the threshold may be set to take said data into account. The threshold may therefore be continuously updated at regular and/or irregular intervals. In some aspects, the threshold may be updated by utilizing a statistical model. Accordingly, a plurality of nominal breakaway torque values of a vehicle may be obtained and stored (e.g. in a cloud computing device or a memory unit of the ECU of the vehicle), and represented in e.g. a histogram or any other representation model. Further, the stored values may be fitted with a distribution model, such as a probability density function. Further, a cumulative distribution function may be derived based on all the obtained nominal breakaway torque values. Subsequently, a nominal threshold (i.e. a threshold for nominal operating conditions) may be approximated/determined, adaptively, from the cumulative distribution function.

Furthermore, the nominal threshold may be altered based on data (e.g. environmental data of the surroundings of the vehicle etc.) to obtain the (actual) threshold. I.e. the threshold, *T_{break-} away = T_{break-away, nominal} + T_{deviation}* (environmental factors, disk temp. etc).

The step of determining may be performed upon initiating a drive cycle for said vehicle. Further, the spinning characteristics may be associated with an amount of torque (i.e. breakaway torque) required to set said vehicle into motion from a static state of said vehicle (which may be referred to as a transition state). The spinning characteristics may be at least one of an amount of torque required to set said vehicle into motion from a static state of said vehicle, an average amount of torque required to set said vehicle into motion from a static state of said vehicle and a duration in time required to set said vehicle into motion from a static state of said vehicle. Preferably, the spinning characteristics at least comprises an amount of torque required to set said vehicle into motion from a static state of said vehicle. The amount may be an absolute amount.

For example, if the vehicle is positioned at a downward inclined surface and is heading downwards, there will be less torque needed to get the vehicle rolling (as a result of the incline). Thus, having a static threshold will not take such cases into account as the vehicle brake pad may need to be cleaned even though it is not evident by the breakaway torque at an inclined surface. Accordingly, the method herein can utilize a threshold having a lower threshold value in such a case so to take e.g. a potential road incline into account.

Further, the threshold may further depend on/be based on a direction said vehicle is moving into from said static state, or is predicted to move into from said static state based on said environmental characteristics. I.e. the threshold may be based on direction said vehicle is moving into from said static state, or is predicted to move into and environmental characteristics. Accordingly, if the vehicle is static at an inclined surface, the threshold should be varied depending on whether the vehicle is going to move downward along the inclined surface or upward along the inclined surface. The vehicle direction may be provided by e.g. the vehicle ECU by e.g. determining which drive gear that is in use (i.e. reverse gear or forward gear).

The disc cleaning operation may comprise a plurality of cleaning modes, each cleaning mode employing/using a specific cleaning intensity, wherein the method, in response to that said spinning characteristics exceeds said threshold, further comprises the step of selecting, based on an amount/magnitude said spinning characteristics exceeds said threshold, one of the plurality of cleaning modes.

Hence, each cleaning mode may have a specific intensity. E.g. each cleaning mode may be associated with a specific time period in which it is active or a specific cleaning power. Hence, if the spinning characteristics barely exceed the threshold, a cleaning mode of low intensity may be utilized.

The spinning characteristics may be determined continuously during a motion state of said vehicle, wherein during said motion state, spinning characteristics comprises at least one of pad friction of said at least one wheel, stiction features of said at least one wheel and rolling resistance of said at least one wheel. However, the invention is not limited to the aforementioned spinning characteristics. Accordingly, upon (initiating a drive cycle) a transition from said static state to a motion state, spinning characteristics may be associated with breakaway torque whereas in said motion state the spinning characteristics is at least one of the aforementioned characteristics.

Advantageously, (consecutive) disc cleaning operations may be activated also after the vehicle has initiated a drive cycle.

Accordingly, the method may in some aspects comprise, upon initiating a drive cycle, the steps of obtaining data indicative of environmental characteristics of a surrounding of said vehicle and determining spinning characteristics associated with breakaway torque of said at least one wheel. Further, the method may comprise the step of activating said brake disc cleaning operation for said at least one wheel in response to said spinning characteristics associated with breakaway torque exceeds a threshold, wherein the threshold is based on said data. Moreover, the method may further comprise, during said motion state, continuously obtain further data indicative of environmental characteristics of said surrounding of said vehicle and determine spinning characteristics of said at least one wheel during said motion state. Further, in response to that the spinning characteristics exceed another threshold the method may, again, activate the brake disc cleaning operation. The spinning characteristics during said motion state may be one or more spinning characteristics. The method may, activate the brake disc cleaning operation if at least one of the one or more spinning characteristics exceed a threshold for said corresponding spinning characteristics. It should be noted that the method in any aspect of the present invention may comprise the step of deactivating the brake disc cleaning operation if the spinning characteristics are below a corresponding threshold thereof.

The method may further comprise, after said disc cleaning operation is activated, deactivating said disc cleaning operation in response to that said spinning characteristics is/falls below said threshold.

An advantage of this is that the method may have the disc cleaning operation ongoing until deemed not necessary which ensure that the brake disc will be cleaned in accordance with requirements.

The stiction features may be determined based on a reoccurring disturbance in the wheel speed of said at least one wheel, wherein said stiction feature is defined as exceeding said threshold if said variation occur for (more than) a specific time-period or for (more than) a specific amount of times.

The data may further be indicative of vehicle characteristics, vehicle characteristics comprising at least one of components of brakes of the vehicle, tire type of the vehicle, dimensional features of the vehicle and a current payload of the vehicle. Also, vehicle characteristics may comprise at least one of tyre pressure and tyre wear of each wheel. Vehicle characteristics and/or environmental characteristics may also comprise stationary duration of the vehicle. The data may further be indicative of driving characteristics, driving characteristics comprising braking habits e.g. max brake force, average brake force and average braking duration. The characteristics may be present environmental/driving characteristics at a current point in time.

Accordingly, the threshold may further take vehicle characteristics into account which enables the method to more accurately set a threshold that is able to identify whether the brake disc requires cleaning.

The method may be performed for each wheel of the vehicle, wherein said clean disc operation is activated for each wheel that comprises spinning characteristics exceeding said threshold. In some aspects herein, each wheel may have an individual threshold.

The present invention further relates to an electronic control unit (ECU) for a vehicle, the ECU being configured to perform the method in accordance with any aspect herein. Further the present invention relates to a vehicle comprising said ECU.

Further, the present invention relates to a computer-readable storage medium storing one or more programs configured to be executed by an electronic control unit of a vehicle, the one or more programs including instructions for performing the method of any aspect herein.

### BRIEF DESCRIPTION OF THE DRAWINGS

These and other features and advantages of the present invention will now be further clarified and described in more detail, with reference to the appended drawings;
- Figure 1: illustrates a method in the form of a flow-chart in accordance with some aspects of the present invention;
- Figure 2: illustrates a method in the form of a flow-chart in accordance with some aspects of the present invention;
- Figure 3: illustrates an objective view of a vehicle transitioning from a static state to a motion state in accordance with some aspects of the present invention;

- Figure 4: illustrates a schematic view of an electronic control unit for a vehicle in accordance with some aspects of the present invention; and
- Figure 5: illustrates an example graph depicting wheel speed and wheel torque with respect to time.
- Figure 6: illustrates a vehicle from a schematic side-view in accordance with some aspects of the present invention.

### DETAILED DESCRIPTION

In the following detailed description, some embodiments of the present invention **will** be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present invention may be practiced without these specific details. In other instances, well known constructions or functions are not described in detail, so as not to obscure the present invention.

The term "upon initiating a drive cycle" may refer to a moment when a vehicles engine/motor is started after a time-period of being deactivated. The time-period may be any time period such at least 1 hour, at least 2 hours, or at least 5hrs.

The term "brake disc cleaning operation" may refer to the operation in which accumulated substance from the surface of the brake discs of at least one wheel of the vehicle are removed. The brake disc cleaning operation may be performed for a pre-determined time-period.

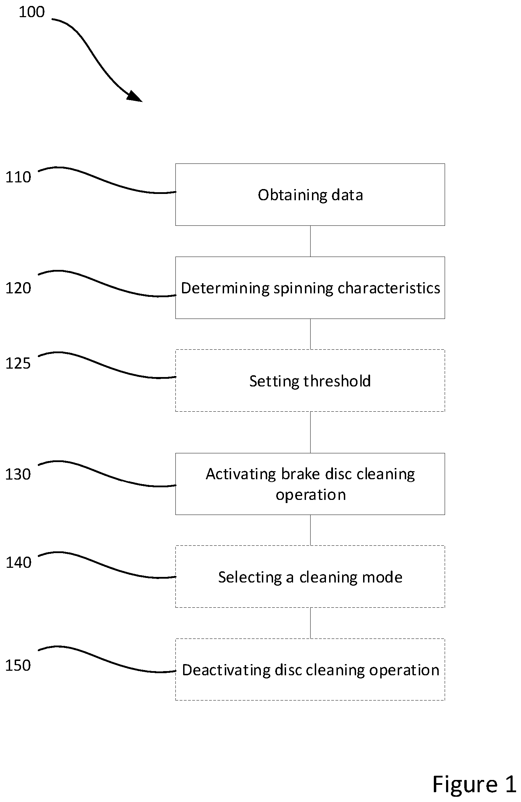

Figure 1 schematically in the form of a flowchart illustrates a method 100 for activating a brake disc cleaning operation for at least one wheel of a vehicle comprising the step of obtaining 110 data indicative of environmental characteristics of a surrounding of said vehicle. Further, the method 100 comprises the step of determining 120 spinning characteristics of said at least one wheel. Moreover, the method 100 comprises the step of activating 130 said brake disc cleaning operation for said at least one wheel in response to said spinning characteristics exceeding a threshold, wherein the threshold is based on said data. Upon activating 130 the brake disc cleaning operation, the operation may be performed directly, or at a subsequent braking event of the vehicle (e.g. by utilizing the abrasive compound in the brake pad to clean the brake disc). Hence, "activating" may refer to that the cleaning operation is to be performed directly or at a subsequent/forthcoming (possible) occasion/opportunity.

The method 100 may generally be computer-implemented such that it may be performed by an ECU of a vehicle. Hence, the step of activating 130 may comprise to provide control signals for activating the brake disc cleaning operation.

Figure 1 further illustrates that the method 100 may further comprise the step of setting/estimating 125 said threshold, wherein said threshold is set based on said data. The data may be at least one of inclination of a surface supporting said vehicle and weather data of said surrounding of said vehicle. Hence, if determined that e.g. there is an environmental condition (some type of weather) that will require a greater threshold, the method 100 may adapt the threshold accordingly such that the threshold takes the weather into account to more accurately being able to determine whether disc cleaning is needed.

Figure 1 further illustrates that the method 100 may comprise the step of, in response to that said spinning characteristics exceeds said threshold, selecting 140, based on an amount said spinning characteristics exceeds said threshold, one of a plurality of cleaning modes. Accordingly, if the spinning characteristics of the at least one wheel exceeds the threshold to a great degree, there may be need of a more intense cleaning operation which the method 100 may control by selecting an appropriate cleaning mode. In some aspects, if the spinning characteristics exceeds said threshold to a pre-determined degree the method 100 may comprise the step of providing a user notification to an ECU of the vehicle for alerting the driver that the brake pads need to be replaced.

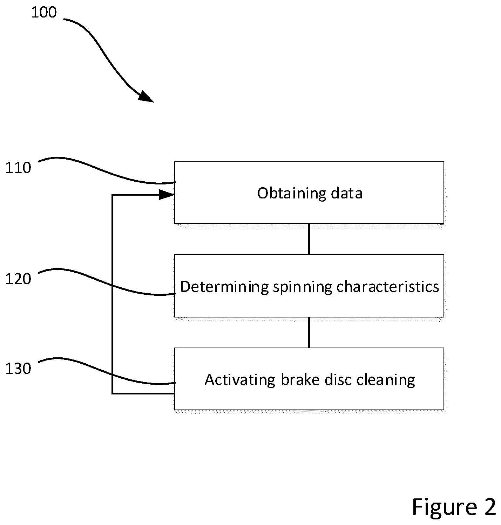

Figure 2 illustrates the method 100 in the form of a flowchart in accordance with an aspect of the method 100. Figure 2 illustrates that the method may iteratively perform the steps of obtaining data 110, determining spinning characteristics 120 and activating brake disc cleaning (if deemed needed). Accordingly, the method 100 may perform the steps 110-130 upon initiating a drive cycle for said vehicle. Further, after the drive cycle has been initiated and the vehicle is in a motion state, the method 100 may, during the motion state, reiterate the steps 110-130. Hence, the steps 110-120 may be continuously (or in some aspects after pre-determined time-intervals) performed during said motion state. In other words, said spinning characteristics may be determined continuously during a motion state of said vehicle so to determine whether the brake disc cleaning should be activated again/repeatedly. In some aspects, the method 100 may be exclusively only be performed upon initiating a drive cycle.

It should be noted that the method 100 according to any aspect herein may be performed for each wheel of the vehicle, wherein said clean disc operation is activated for each wheel that comprises spinning characteristics exceeding said threshold. Hence, the method 100 may be performed independently for each wheel or wheel axle as in some aspects, the data may differ for each wheel/wheel axle (such as a case where the vehicle comprise a plurality of electric motors). However, in some aspects the method 100 may be performed collectively for all wheels.

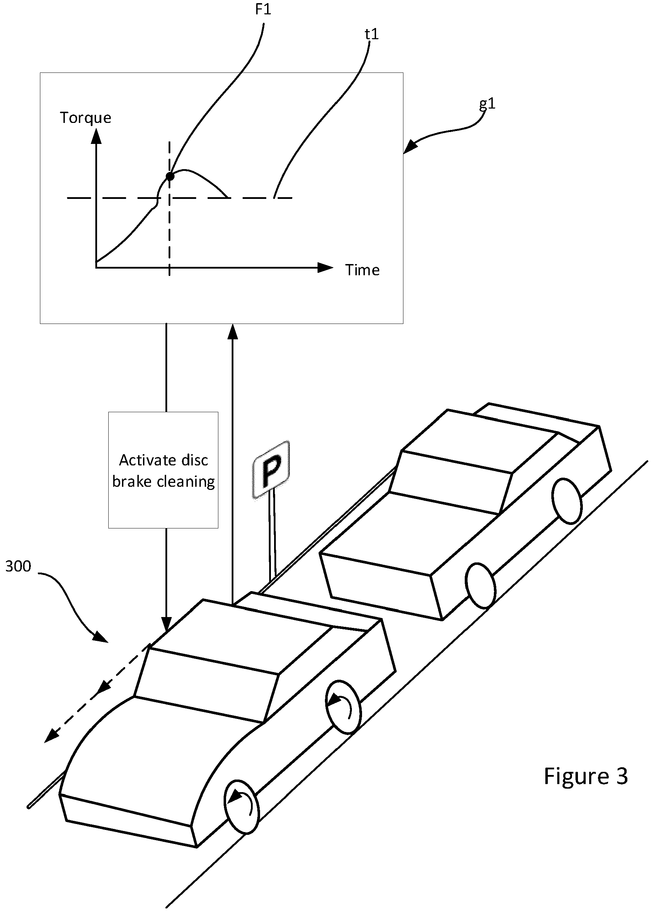

Figure 3 illustrates an objective illustration of a vehicle 300 initiating a drive cycle from a static state in which it has been parked for a time-period. The vehicle 300 is heading downward along an inclined surface. Figure 3 illustrates that the vehicle 300 is set into motion from said static state. Figure 3 further illustrates a graph g1 depicting that upon transitioning from the static state to said motion state such that the vehicle wheels starts rolling, the breakaway torque F1 exceeds a threshold t1 (i.e. in this example, spinning characteristics is breakaway torque). Accordingly, in response to that the breakaway torque exceeds said threshold t1, the vehicle 300 activates the disc brake cleaning as a response to that the threshold t1 was exceeded. Moreover, as previously described herein, depending on the amount said threshold t1 is exceeded, an appropriate cleaning mode can be selected.

In some aspects, breakaway torque may be estimated by the following equation: ${T}_{break - away} = {T}_{wheel} - {T}_{rolling} - {T}_{slope} - l α$ where *T_{wheel}* is wheel torque, *T_{rolling}* is rolling torque, *Tₛₗₒₚₑ* is torque due to road slope/inclination, *Iα* Is torque due to inertia.

The parameters may be obtained from one or more sensors of the vehicle such as road gradient sensors, inertia measurement units, current sensors of the electric motor of the vehicle, suspension sensors.

In Figure 3, as the vehicle 300 is moved from a static state, the spinning characteristics is be breakaway torque (as an absolute value) as illustrated in graph g1. Subsequently, after the vehicle 300 is in motion, the method may determine other spinning characteristics being at least one of pad friction of said at least one wheel/wheel axle, stiction features of said at least one wheel/wheel axle and rolling resistance of said at least one wheel/wheel axle.

Accordingly, upon said initiation of said drive cycle the spinning characteristics that is determined may be regarded as first spinning characteristics, the first spinning characteristics being associated with/related to breakaway torque. Further, after said vehicle has initiated said drive cycle and is in said motion state, the spinning characteristics that is determined is second spinning characteristics. Second spinning characteristics being at least one of pad friction of said at least one wheel/wheel axle, stiction features of said at least one wheel/wheel axle and rolling resistance of said at least one wheel/wheel axle. Thus, the threshold that is applied during the initiation of said drive cycle may be regarded as a first threshold and the threshold that is applied/set during said motion state may be regarded as a second threshold.

In other words, the method may be iterated during said motion state, wherein in said motion state the spinning characteristics is second spinning characteristics and the threshold is a second threshold. Hence, in a situation where the brake disc cleaning is initiated during said drive cycle initiation as a response to that the first spinning characteristics has exceeded a first threshold. Subsequently, if during the motion state, the second spinning characteristics falls under/is below said second threshold, the method may deactivate the brake disc cleaning operation.

Pad friction may be determined by one or more sensor devices, or by any other computation or calculating means. Rolling resistance may be determined based on the force that opposes the motion of the tire. Stiction features may be determined based on a reoccurring disturbance in the wheel speed of said at least one wheel, wherein said stiction feature is defined as exceeding said threshold if said variation occur for a specific time-period or for a specific amount of times.

In Figure 3, the threshold is depending on a direction said vehicle 300 is moving into from said static state, or is predicted to move into from said static state. Accordingly, as the vehicle 300 of Figure 3 is to move forward (i.e. downwards along the inclined surface) the threshold may be set to take this into account. The spinning characteristics associated with breakaway torque will be lower if the vehicle 300 is to move along an inclined surface compared to if the vehicle 300 is to move upwards of an inclined surface - this will then affect the threshold. The method may predict that the vehicle 300 is moving along the inclined surface as there is another vehicle behind the vehicle 300 or based on the gear that the user has activated before pressing the accelerator pedal.

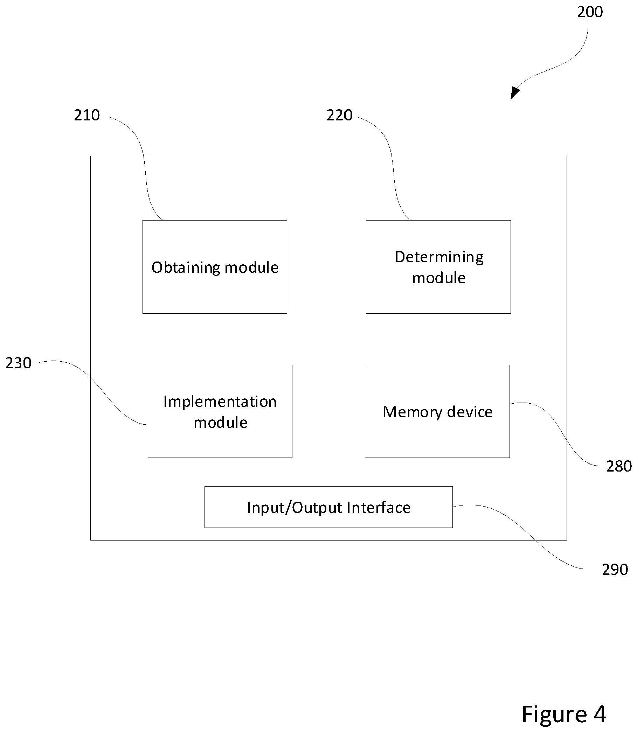

Figure 4 illustrates schematically an ECU 200 for a vehicle, the ECU being configured to perform the method 100 of any aspect herein. As illustrated in Figure 4, the ECU 200 may comprise an obtaining module 210 configured to obtain data. A determining module 220 configured to determine spinning characteristics of at least one wheel of a vehicle and an implementation module 230 configured to activate/deactivate/control a brake disc cleaning operation.

Moreover, as illustrated in Figure 4, the control device 200 may comprise one or more memory devices 280. The memory device 280 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by each associated module 210, 220, 230, 290. Each memory device 280 may store any suitable instructions, data or information, including a computer program, software, an application including one or more of logic, rules, code, tables, etc. and/or other instructions capable of being executed by modules 210, 220, 230, 290 and, utilized. Specifically, the memory device 280 may store a pre-determined model that enables thresholds to be set/selected based on the data. Hence, the determining module 220 may utilize said model to determine whether the threshold is exceeded to activate the brake disc cleaning as a response to that. The pre-determined model may be trained by the by e.g. training module of the control device 200 so to form a trained aggregated model that can be stored in a cloud computing server and be utilized by a vehicle fleet. Accordingly, in some aspects, the pre-determined model may be trained, e.g. by a learning algorithm. Memory device 280 may be used to store any calculations made by determining module 220 and/or any data received via output and input interface 290. The interfaces 290 may receive data. The data may be received from on-board sensors of the vehicle or from any other external device/sensor. The memory device 280 may store any instructions and/or programs that may carry out the method according to the disclosure herein. The instructions may be executed by the control device 200. The instructions may comprise instructions for determining spinning characteristics and thresholds. Generally, it may comprise instructions to perform any of the steps in the method 100 as illustrated in figure 1.

In some embodiments, the memory device 280 may be considered to be integrated in one or more of the modules. In some embodiments, the memory device 280 and related data are stored in a cloud server accessible by the control device 200.

The modules 210, 220, 230 may comprise, for example, one or more central processing units (CPUs), graphics processing units (GPUs) dedicated to performing calculations, and/or other processing devices.

The communication between modules, interfaces, sensors, external devices may be performed by any type of communication network, such as a local area network (e.g. intranet), wide area network (e.g. Internet), cellular network, or some combination thereof.

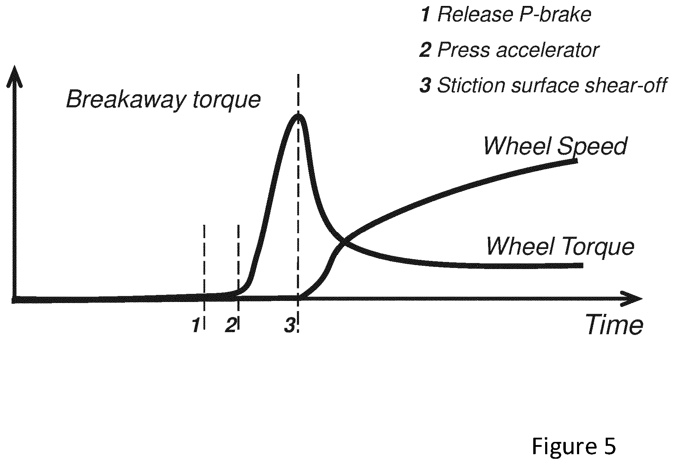

Figure 5 illustrates a graph that depicts plots of wheel speed and wheel torque of at least one wheel or wheel axle. Number 3 in the graph depicts the breakaway torque. Numbers 2 to3 may be utilized to derive average wheel torque to breakaway and time duration to breakaway (from the moment the accelerator pedal of the vehicle is pressed).

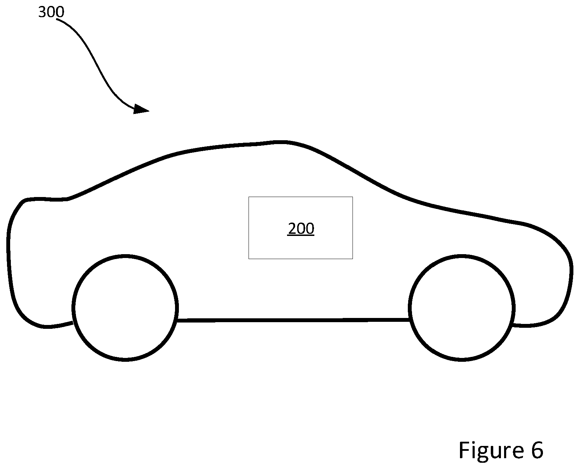

Figure 6 illustrates a schematic side view of a vehicle 300 comprising said ECU 200 illustrated in Figure 4. The vehicle 300 may be any suitable type of vehicle such as an electric vehicle, a vehicle having a combustion engine or a hybrid vehicle. The vehicle may comprise one or more sensor devices (not shown) that are configured to obtain sensor data (such as the data obtained in the method). However, such data may also be obtained by external devices (e.g. a cloud computing device). The sensor devices may comprise oat least one of road gradient sensors, inertia measurement units, current sensors of the electric motor of the vehicle, suspension sensors, speed sensors, tire pressure sensors, torque sensors etc.

## Claims

1. A method (100) for activating a brake disc cleaning operation for at least one wheel of a vehicle comprising:
- obtaining (110) data indicative of environmental characteristics of a surrounding of said vehicle;
- determining (120) spinning characteristics of said at least one wheel;
- activating (130) said brake disc cleaning operation for said at least one wheel in response to said spinning characteristics exceeding a threshold, wherein the threshold is based on said data, wherein said environmental characteristics comprises inclination of a surface supporting said vehicle.

2. The method (100) according to claim 1, wherein the method further comprises:
- setting (125) said threshold, wherein said threshold is set based on said data.

3. The method (100) according to any one of the preceding claims, wherein the step of determining is performed upon initiating a drive cycle for said vehicle, wherein the spinning characteristics is associated with an amount of torque required to set said vehicle into motion from a static state of said vehicle.

4. The method (100) according to claim 3, wherein the spinning characteristics is at least one of an amount of torque required to set said vehicle into motion from a static state of said vehicle, an average amount of torque required to set said vehicle into motion from a static state of said vehicle and a duration in time required to set said vehicle into motion from a static state of said vehicle.

5. The method (100) according to claims 1-4, wherein the threshold is further depending on a direction said vehicle is moving into from said static state, or is predicted to move into from said static state.

6. The method (100) according to any one of the preceding claims, wherein said disc cleaning operation comprises a plurality of cleaning modes, each cleaning mode employing a specific cleaning intensity, wherein the method, in response to that said spinning characteristics exceeds said threshold, further comprises the step of:
- selecting (140), based on an amount said spinning characteristics exceeds said threshold, one of the plurality of cleaning modes.

7. The method (100) according to any one of the preceding claims, wherein said spinning characteristics is determined continuously during a motion state of said vehicle, wherein during said motion state, spinning characteristics comprises at least one of pad friction of said at least one wheel, stiction features of said at least one wheel and rolling resistance of said at least one wheel.

8. The method (100) according to claim 7, wherein the method further comprises, after said disc cleaning operation is activated:
- deactivating (150) said disc cleaning operation in response to that said spinning characteristics is below said threshold.

9. The method (100) according to claim 7 or 8, wherein said stiction features is determined based on a reoccurring disturbance in the wheel speed of said at least one wheel, wherein said stiction feature is defined as exceeding said threshold if said variation occur for a specific time-period or for a specific amount of times.

10. The method (100) according to any one of the preceding claims, wherein said data is further indicative of vehicle characteristics, vehicle characteristics comprising at least one of components of brakes of the vehicle, tire type of the vehicle, dimensional features of the vehicle and a current payload of the vehicle.

11. The method (100) according to any one of the preceding claims, wherein the method is performed for each wheel of the vehicle, wherein said clean disc operation is activated for each wheel that comprises spinning characteristics exceeding said threshold.

12. An electronic control unit (200), ECU, for a vehicle (300), the ECU (200) being configured to perform the method (100) in accordance with any one of the claims 1-11.

13. A vehicle (300) comprising said ECU according to claim 12.

14. A computer-readable storage medium storing one or more programs configured to be executed by an electronic control unit (200) of a vehicle (300), the one or more programs including instructions for performing the method (100) of any of claims 1-11.

## Patentansprüche

1. Verfahren (100) zum Aktivieren eines Bremsscheibenreinigungsvorgangs für mindestens ein Rad eines Fahrzeugs, umfassend:
• Erhalten (110) von Daten, die auf Umgebungsmerkmale einer Umgebung des Fahrzeugs hinweisen;
• Bestimmen (120) von Dreheigenschaften des mindestens einen Rads;
• Aktivieren (130) des Bremsscheibenreinigungsvorgangs für das mindestens eine Rad als Reaktion darauf, dass die Dreheigenschaften einen Schwellenwert überschreiten, wobei der Schwellenwert auf den Daten basiert, wobei die Umgebungsmerkmale die Neigung einer Fläche umfassen, die das Fahrzeug trägt.

2. Verfahren (100) nach Anspruch 1, wobei das Verfahren ferner umfasst:
• Einstellen (125) des Schwellenwerts, wobei der Schwellenwert basierend auf den Daten eingestellt wird.

3. Verfahren (100) nach einem der vorhergehenden Ansprüche, wobei der Schritt des Bestimmens beim Einleiten eines Fahrzyklus für das Fahrzeug durchgeführt wird, wobei die Dreheigenschaften mit einem Drehmomentbetrag verbunden sind, der erforderlich ist, um das Fahrzeug aus einem statischen Zustand des Fahrzeugs in Bewegung zu versetzen.

4. Verfahren (100) nach Anspruch 3, wobei die Dreheigenschaften mindestens eines der Folgenden sind: ein Drehmomentbetrag, der erforderlich ist, um das Fahrzeug aus einem statischen Zustand des Fahrzeugs in Bewegung zu versetzen, ein durchschnittlicher Drehmomentbetrag, der erforderlich ist, um das Fahrzeug aus einem statischen Zustand des Fahrzeugs in Bewegung zu versetzen, und eine Zeitdauer, die erforderlich ist, um das Fahrzeug aus einem statischen Zustand des Fahrzeugs in Bewegung zu versetzen.

5. Verfahren (100) nach den Ansprüchen 1-4, wobei der Schwellenwert ferner von einer Richtung abhängt, in die sich das Fahrzeug aus dem statischen Zustand bewegt oder sich voraussichtlich aus dem statischen Zustand bewegen wird.

6. Verfahren (100) nach einem der vorhergehenden Ansprüche, wobei der Scheibenreinigungsvorgang eine Vielzahl von Reinigungsmodi umfasst, wobei jeder Reinigungsmodus eine spezifische Reinigungsintensität anwendet, wobei das Verfahren als Reaktion darauf, dass die Dreheigenschaften den Schwellenwert überschreiten, ferner den folgenden Schritt umfasst:
- Auswählen (140) eines der Vielzahl von Reinigungsmodi, basierend auf einem Betrag, um den die Dreheigenschaften den Schwellenwert überschreiten.

7. Verfahren (100) nach einem der vorhergehenden Ansprüche, wobei die Dreheigenschaften während eines Bewegungszustands des Fahrzeugs kontinuierlich bestimmt werden, wobei die Dreheigenschaften während des Bewegungszustands mindestens eines der Folgenden umfassen: Bremsbelagreibung des mindestens einen Rads, Stick-Slip-Merkmale des mindestens einen Rads und Rollwiderstand des mindestens einen Rads.

8. Verfahren (100) nach Anspruch 7, wobei das Verfahren nach dem Aktivieren des Scheibenreinigungsvorgangs ferner umfasst:
- Deaktivieren (150) des Scheibenreinigungsvorgangs als Reaktion darauf, dass die Dreheigenschaften unter dem Schwellenwert liegen.

9. Verfahren (100) nach Anspruch 7 oder 8, wobei die Stick-Slip-Merkmale basierend auf einer wiederkehrenden Störung der Raddrehzahl des mindestens einen Rads bestimmt werden, wobei definiert ist, dass das Stick-Slip-Merkmal den Schwellenwert überschreitet, wenn diese Variation für eine bestimmte Zeitdauer oder für eine bestimmte Anzahl von Malen auftritt.

10. Verfahren (100) nach einem der vorhergehenden Ansprüche, wobei die Daten ferner auf Fahrzeugeigenschaften hinweisen, wobei die Fahrzeugeigenschaften mindestens eines von Komponenten der Bremsen des Fahrzeugs, Reifentyp des Fahrzeugs, Dimensionsmerkmalen des Fahrzeugs und einer aktuellen Nutzlast des Fahrzeugs umfassen.

11. Verfahren (100) nach einem der vorhergehenden Ansprüche, wobei das Verfahren für jedes Rad des Fahrzeugs durchgeführt wird, wobei der Scheibenreinigungsvorgang für jedes Rad aktiviert wird, das Dreheigenschaften aufweist, die den Schwellenwert überschreiten.

12. Elektronische Steuereinheit (200), ECU, für ein Fahrzeug (300), wobei die ECU (200) dazu konfiguriert ist, das Verfahren (100) nach einem der Ansprüche 1-11 durchzuführen.

13. Fahrzeug (300), umfassend die ECU nach Anspruch 12.

14. Computerlesbares Speichermedium, das ein oder mehrere Programme speichert, die so konfiguriert sind, dass sie von einer elektronischen Steuereinheit (200) eines Fahrzeugs (300) ausgeführt werden, wobei das eine oder die mehreren Programme Anweisungen zur Durchführung des Verfahrens (100) nach einem der Ansprüche 1-11 enthalten.

## Revendications

1. Procédé (100) pour activer une opération de nettoyage de disque de frein pour au moins une roue d'un véhicule comprenant :
• l'obtention (110) de données indicatives des caractéristiques environnementales d'un environnement dudit véhicule ;
• la détermination (120) de caractéristiques de rotation de ladite au moins une roue ;
• l'activation (130) de ladite opération de nettoyage de disque de frein pour ladite au moins une roue en réponse au dépassement d'un seuil par lesdites caractéristiques de rotation, dans lequel le seuil est basé sur lesdites données, dans lequel lesdites caractéristiques environnementales comprennent l'inclinaison d'une surface supportant ledit véhicule.

2. Procédé (100) selon la revendication 1, dans lequel le procédé comprend en outre :
• le réglage (125) dudit seuil, dans lequel ledit seuil est réglé sur la base desdites données.

3. Procédé (100) selon l'une quelconque des revendications précédentes, dans lequel l'étape de détermination est effectuée lors de l'initiation d'un cycle de conduite pour ledit véhicule, dans lequel les caractéristiques de rotation sont associées à une quantité de couple requise pour mettre ledit véhicule en mouvement à partir d'un état statique dudit véhicule.

4. Procédé (100) selon la revendication 3, dans lequel les caractéristiques de rotation sont au moins l'une parmi une quantité de couple requise pour mettre ledit véhicule en mouvement à partir d'un état statique dudit véhicule, une quantité moyenne de couple requise pour mettre ledit véhicule en mouvement à partir d'un état statique dudit véhicule et une durée requise pour mettre ledit véhicule en mouvement à partir d'un état statique dudit véhicule.

5. Procédé (100) selon les revendications 1 à 4, dans lequel le seuil dépend en outre d'une direction dans laquelle ledit véhicule se déplace à partir dudit état statique, ou est prévu de se déplacer à partir dudit état statique.

6. Procédé (100) selon l'une quelconque des revendications précédentes, dans lequel ladite opération de nettoyage de disque comprend une pluralité de modes de nettoyage, chaque mode de nettoyage employant une intensité de nettoyage spécifique, dans lequel le procédé, en réponse au fait que lesdites caractéristiques de rotation dépassent ledit seuil, comprend en outre l'étape consistant à :
• sélectionner (140), sur la base d'une quantité dont lesdites caractéristiques de rotation dépassent ledit seuil, l'un de la pluralité de modes de nettoyage.

7. Procédé (100) selon l'une quelconque des revendications précédentes, dans lequel lesdites caractéristiques de rotation sont déterminées en continu pendant un état de mouvement dudit véhicule, dans lequel, pendant ledit état de mouvement, les caractéristiques de rotation comprennent au moins l'un parmi le frottement des plaquettes de ladite au moins une roue, les caractéristiques de glissement saccadé de ladite au moins une roue et la résistance au roulement de ladite au moins une roue.

8. Procédé (100) selon la revendication 7, dans lequel le procédé comprend en outre, après l'activation de ladite opération de nettoyage de disque :
• la désactivation (150) de ladite opération de nettoyage de disque en réponse au fait que lesdites caractéristiques de rotation sont inférieures audit seuil.

9. Procédé (100) selon la revendication 7 ou 8, dans lequel lesdites caractéristiques de glissement saccadé sont déterminées sur la base d'une perturbation récurrente de la vitesse de roue de ladite au moins une roue, dans lequel ladite caractéristique de glissement saccadé est définie comme dépassant ledit seuil si ladite variation se produit pendant une période de temps spécifique ou un nombre de fois spécifique.

10. Procédé (100) selon l'une quelconque des revendications précédentes, dans lequel lesdites données sont en outre indicatives de caractéristiques du véhicule, les caractéristiques du véhicule comprenant au moins l'un des composants des freins du véhicule, du type de pneu du véhicule, des caractéristiques dimensionnelles du véhicule et d'une charge utile actuelle du véhicule.

11. Procédé (100) selon l'une quelconque des revendications précédentes, dans lequel le procédé est exécuté pour chaque roue du véhicule, dans lequel ladite opération de nettoyage de disque est activée pour chaque roue qui comprend des caractéristiques de rotation dépassant ledit seuil.

12. Unité de commande électronique (200), ECU, pour un véhicule (300), l'ECU (200) étant configurée pour exécuter le procédé (100) selon l'une quelconque des revendications 1 à 11.

13. Véhicule (300) comprenant ladite ECU selon la revendication 12.

14. Support de stockage lisible par ordinateur stockant un ou plusieurs programmes configurés pour être exécutés par une unité de commande électronique (200) d'un véhicule (300), le ou les programmes comprenant des instructions pour exécuter le procédé (100) selon l'une quelconque des revendications 1 à 11.
